# EUROPÄISCHE PATENTSCHRIFT

(11) **EP 0 856 436 B1**
(45) Veröffentlichungstag und Bekanntmachung des Hinweises auf die Patenterteilung: **21.03.2001**
(21) Anmeldenummer: 97121312.9
(22) Anmeldetag: 04.12.1997
(51) Int. Cl.: B60R 21/20, B60R 7/06

(54) **Knieschutzsystem für den Beifahrer in Personenkraftwagen**
Knee protection system for the passenger of a motor vehicle
Système protège-genoux pour le passager d'un véhicule automobile

(30) Priorität: 30.01.1997 DE 19703430
(43) Veröffentlichungstag der Anmeldung: 05.08.1998
(73) Patentinhaber: Bayerische Motoren Werke Aktiengesellschaft, 80788 München (DE)
(72) Erfinder: Stavermann, Joerg, 80331 München (DE)

(56) Entgegenhaltungen:
- DE-A- 4 217 173
- US-A- 4 948 168
- US-A- 5 385 378

## Beschreibung

Die Erfindung betrifft ein Knieschutzsystem für den Beifahrer in Personenkraftwagen mit einem unterhalb der Instrumententafel oder dem Querrohr angeordneten Handschuhkasten, der als Klappkasten ausgeführt und um eine näherungsweise horizontale Achse verschwenkbar und im Bereich seines freien Randes mit einer Verriegelungseinrichtung versehen ist.

Zum Schutz des Brust- und Beckenbereichs des Beifahrers in einem Personenkraftwagen ist es bekannt, in der Instrumententafel ein Luftsackmodul anzuordnen, das bei einer plötzlichen Beschleunigung infolge eines Unfalls aktiviert wird. Insbesondere dann, wenn der Beifahrer nicht angeschnallt ist, besteht aber die Gefahr einer Verletzung im Knie- und Unterschenkelbereich. Zur Minderung dieser Gefahr wäre es dankbar, im Handschuhkasten ein zusätzliches Luftsackmodul anzuordnen. Dadurch wird aber nicht nur der nutzbare Raum des Handschuhkastens verkleinert, sondern die Bedienung des Handschuhkastens wird durch das zusätzliche Gewicht des Luftsackmoduls erschwert. Außerdem besteht die Gefahr, daß bei der Verschwenkung des Handschuhkastens die elektrischen Versorgungsleitungen des Luftsackmoduls beschädigt werden, so daß dieses nicht mehr funktionsfähig ist. Eine andere mögliche Maßnahme zum Schutz des Beifahrers im Knie- und Unterschenkelbereich bestünde in einer besonderen Polsterung des Handschuhkastens. Durch eine derartige Polsterung würde die Beinfreiheit aber stark beeinträchtigt.

Der Erfindung liegt die Aufgabe zugrunde, ein Knieschutzsystem für den Beifahrer in Personenkraftwagen zu schaffen, dessen Einbau keine Schwierigkeiten bereitet, keinen wertvollen Platz in Anspruch nimmt und sich durch eine hohe Wirksamkeit bei gleichzeitiger Erhaltung der Funktionsfähigkeit des Handschuhkastens auszeichnet.

Erfindungsgemäß wird diese Aufgabe dadurch gelöst, daß über dem Klappkasten eine formstabile Haube angeordnet ist, die gemeinsam mit dem Klappkasten verschwenkbar ist, daß über der Haube ein Luftsackmodul ortsfest angeordnet ist, daß mit der Instrumententafel und/oder mit dem Querrohr ein formstabiles Element verbunden ist, das als obere Abstützung für den aufgeblasenen Luftsack dient, während die Oberseite der Haube als untere Abstützung dient, daß die Haube mit einem Schließelement versehen ist, das mit der Verriegelungseinrichtung des Klappkastens zusammenwirkt, und daß die Haube im Bereich des freien Randes durch Abreißelemente mit der Instrumententafel oder mit dem formstabilen Element verbunden ist.

Im normalen Fahrbetrieb ersetzt die Haube das üblicherweise an der Instrumententafel angebrachte Bauteil, das mit dem Schließelement versehen ist. Diese Haube, das formstabile Element und das Luftsackmodul können daher ohne aufwendige Änderungen in einen vorhandenen Fahrzeugtyp eingebaut werden. Wenn das Luftsackmodul bei einem Aufprall infolge eines Unfalls aktiviert wird, dann wird der Luftsack aufgeblasen, wobei er sich an der Haube und an dem formstabilen Element abstützt. Sobald die vorbestimmte Haltekraft der Abreißelemente überwunden ist, schwenkt die Haube zusammen mit dem Klappkasten um die gemeinsame Achse nach unten, und der Luftsack kann sich nach hinten in den Fahrgastraum hinein entfalten. Dabei bewegt sich der Klappkasten zu den Unterschenkeln des Beifahrers hin, so daß diese frühzeitig abgefangen werden können. Da der Klappkasten mit der Haube verriegelt ist und somit keine scharfen Kanten vorliegen, wird das Verletzungsrisiko weiter verringert. Darüberhinaus ist der Inhalt des Handschuhkastens gegen Herausfallen gesichert.

Zweckmäßige Weiterbildungen der Erfindung ergeben sich aus den Unteransprüchen.

Ein bevorzugtes Ausführungsbeispiel der Erfindung ist in den Zeichnungen dargestellt und wird nachfolgend näher erläutert. Es zeigt:
Fig. 1 einen schematischen Querschnitt durch die Instrumententafel und den Handschuhkasten eines Personenkraftwagens im Normalzustand, und
Fig. 2 eine Darstellung ähnlich wie Fig. 1 nach Aktivierung eines Luftsackmoduls.

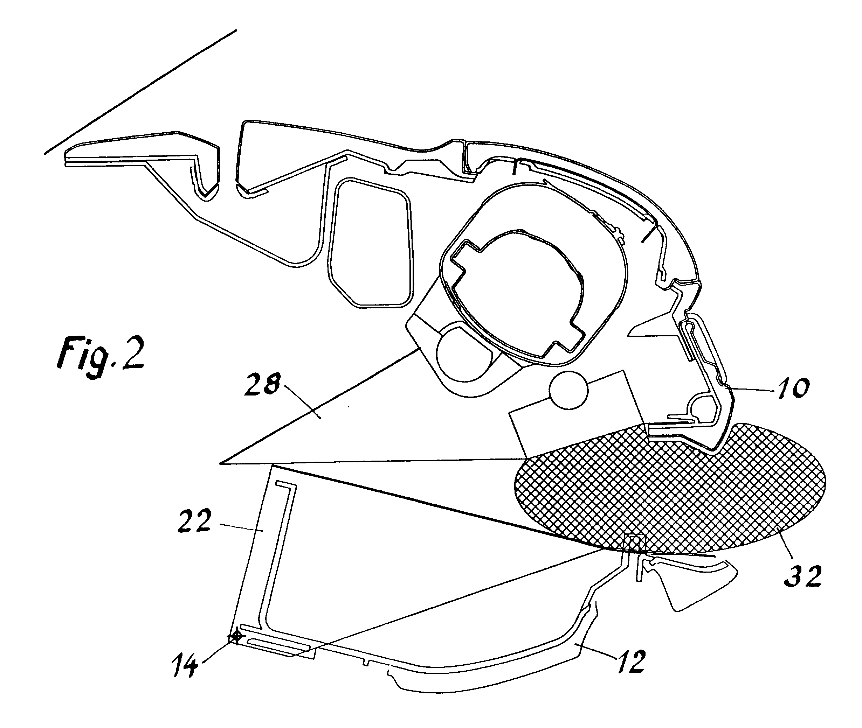

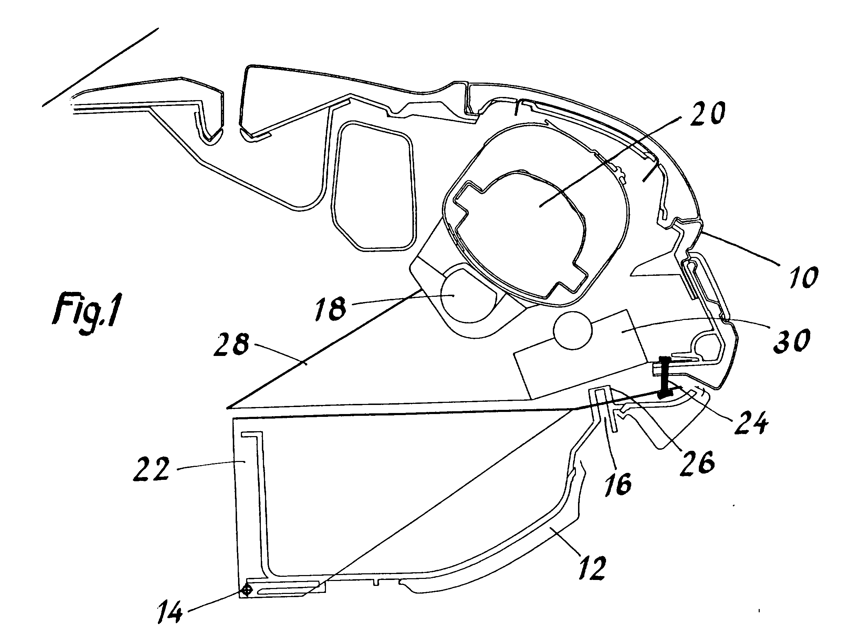

Wie aus Fig. 1 hervorgeht, ist unter einer Instrumententafel 10 eines Personenkraftwagens ein Handschuhkasten 12 angeordnet, der im Bereich seines unteren abliegenden Endes um eine fahrzeugfeste horizontale Achse 14 verschwenkbar ist. Wegen der schwenkbaren Lagerung wird ein solcher Handschuhkasten auch als Klappkasten bezeichnet. Im Bereich seines oberen freien Randes ist der Handschuhkasten 12 mit einer Verriegelungseinrichtung 16 versehen, mit der er gegenüber der Instrumententafel 10 in der gezeigten Normalstellung verriegelt werden kann. Unterhalb der Instrumententafel 10 befindet sich ein Querrohr 18, das ein Luftsackmodul 20 zum Schutz des Brust und Beckenbereichs einer auf dem (nicht gezeigten) Beifahrersitz befindlichen Person trägt. Die vorstehend beschriebenen Ausbildung der Instrumententafel und des Handschuhkastens im Bereich des Beifahrers ist allgemein üblich und bedarf daher keiner weiteren Erläuterung.

Über dem Handschuhkasten 12 ist eine formstabile Haube 22 angeordnet, die diesen mit zwei Wangen seitlich umgreift. Die beiden Wangen der Haube 22 sind auf der fahrzeugfesten Achse 14 drehbar gelagert. An ihrem freien oberen Rand ist die Haube 22 mit Abreißelementen 24 an der Instrumententafel 10 befestigt. In der Zeichnung sind diese Abreißelemente nur schematisch dargestellt. Dabei kann es sich beispielsweise um bekannte Drehknebel aus Kunststoff handeln. Im Bereich ihres freien Randes ist die Haube 22 mit einem Schließelement 26 versehen, das mit der Verriegelungseinrichtung 16 des Handschuhkastens 12 zusammenwirkt. Die Verriegelungseinrichtung 16 kann ein mit einer Hinterschneidung versehener drehbarer oder verschiebbarer Riegel sein, und das Schließelement 26 kann als Schließblech ausgebildet sein. Die Ausbildung der Verriegelungseinrichtung und des Schließelements ist aber nicht erfindungswesentlich, es kommt nur darauf an, daß der Handschuhkasten 12 nicht wie bei Stand der Technik unmittelbar mit der Instrumententafel 10, sondern mit der Haube 22 verriegelbar ist, die ihrerseits durch die Abreißelemente 24 mit der Instrumententafel 10 verbunden ist.

Im Abstand über der Haube 22 ist ein formstabiles Element 28 ortsfest angeordnet. Dieses formstabile Element 28 besteht aus einem Boden mit zwei seitlichen Wangen, die am Querrohr 18 befestigt sind. In den Boden des formstabilen Elements 28 ist ein Knieschutz-Luftsackmodul 30 eingesetzt. Dieses untere Luftsackmodul 30 könnte auch am Querrohr 18 befestigt sein, es kommt nur darauf an, daß sich der zugehörige Luftsack in den von dem Element 28 und der Haube 22 begrenzten Raum hinein entfalten kann.

Zum Öffnen des Handschuhkastens 12 kann in herkömmlicher Weise die Verriegelungseinrichtung 16 betätigt werden, so daß der Handschuhkasten 12 gegenüber der an der Instrumententafel 10 befestigten Haube 22 unter seinem Eigengewicht um die Achse 14 nach unten schwenkt.

Wenn bei einem Aufprall des Kraftfahrzeugs das Knieschutz-Luftsackmodul 30 ausgelöst wird, dann wird der zugehörige Luftsack 32 aufgeblasen, wobei er sich am Boden des fahrzeugfesten Elements 28 und an der Oberseite der Haube 22 abstützt. Nach Überschreiten einer bestimmten Andrückkraft werden die Abreißelemente 24 zerstört, und die Haube 22 bewegt sich gemeinsam mit dem damit verriegelten Handschuhkasten 12 nach unten. Der Luftsack 32 kann sich daher weiter in die in Fig. 2 gezeigte Stellung aufblasen. Beim Auftreffen der Unterschenkel bzw. der Knie des Beifahrers auf den Handschuhkasten 12 wird das Gas aus dem Luftsack herausgedrückt und die Bewegung des Beifahrers wird verzögert.

Für den Fachmann ist erkennbar, daß das vorstehend beschriebene und in der Zeichnung dargestellte Ausführungsbeispiel auf vielfache Weise abgewandelt werden kann. Es kommt lediglich darauf an, daß der Handschuhkasten 12 mit der Haube 22 verriegelt ist und daß die Haube 22 mit der Instrumententafel 10, dem formstabilen Element 28 oder mit dem Querrohr 18 lösbar verbunden ist, so daß sie beim Auslösen des Knieschutz-Luftsackmoduls 30 gegenüber der Instrumententafel 10 gemeinsam mit dem Handschuhkasten 12 nach unten verschwenkt wird und der Luftsack 32 durch die dadurch gebildete vordere Öffnung in den Fahrgastraum hinein aufgeblasen werden kann. Es ist auch eine Ausführungsform denkbar, bei der das Brustschutz-Luftsackmodul 20 und das Knieschutz-Luftsackmodul 30 als Baueinheit ausgebildet sind.

### Bezugszeichenliste:

- 10: Instrumententafel
- 12: Handschuhkasten (Klappkasten)
- 14: Achse
- 16: Verriegelungseinrichtung
- 18: Querrohr
- 20: Brustschutz-Luftsackmodul
- 22: Haube
- 24: Abreißelemente
- 26: Schließelement
- 28: formstabiles Element
- 30: Knieschutz-Luftsackmodul
- 32: Luftsack

## Patentansprüche

1. Knieschutzsystem für den Beifahrer in Personenkraftwagen mit einem unterhalb der Instrumententafel oder dem Querrohr angeordneten Handschuhkasten, der als Klappkasten ausgeführt und um eine näherungsweise horizontale Achse verschwenkbar und im Bereich seines freien Randes mit einer Verriegelungseinrichtung versehen ist, dadurch **gekennzeichnet,** daß über dem Klappkasten (12) eine formstabile Haube (22) angeordnet ist, die gemeinsam mit dem Klappkasten (12) verschwenkbar ist, daß über der Haube (22) ein Luftsackmodul (30) ortsfest angeordnet ist, daß mit der Instrumententafel (10) und/oder mit dem Querrohr (18) ein formstabiles Element (28) verbunden ist, das als obere Abstützung für den aufgeblasenen Luftsack (32) dient, während die Oberseite der Haube (22) als untere Abstützung dient, daß die Haube (22) mit einem Schließelement (26) versehen ist, das mit der Verriegelungseinrichtung (16) des Klappkastens (12) zusammenwirkt, und daß die Haube (22) im Bereich des freien Randes durch Abreißelemente (24) mit der Instrumententafel (10) oder mit dem formstabilen Element (28) verbunden ist.

2. Knieschutzsystem nach Anspruch 1, dadurch **gekennzeichnet,** daß die Haube (22), das Element (28) und das Luftsackmodul (30) so an einen bestimmten Fahrzeugtyp angepaßt sind, daß sie als Zubehör eingebaut werden können.

3. Knieschutzsystem nach Anspruch 1 oder 2, dadurch **gekennzeichnet,** daß das Luftsackmodul (30) an dem formstabilen Element (28) befestigt ist.

4. Knieschutzsystem nach Anspruch 1, 2 oder 3, dadurch **gekennzeichnet,** daß die Abreißelemente (24) aus Kunststoff bestehen.

5. Knieschutzsystem nach Anspruch 4, dadurch **gekennzeichnet,** daß die Abreißelemente (24) als Drehknebel ausgebildet sind.

6. Knieschutzsystem nach einem der Ansprüche 1 bis 4, dadurch **gekennzeichnet,** daß es mit geometrischen Anpassungen im Bereich des Lenksäulendurchtritts auch auf der Fahrerseite einsetzbar ist.

## Claims

1. A system for protecting the knees of a passenger in a car, comprising a glovebox disposed under the instrument panel or under the cross-tube, the glovebox being in the form of a pivoting box and pivotable around an approximately horizontally axis and provided with a locking means near its free edge, **characterised in that** a dimensionally stable hood (22) is disposed above the pivoting box (12) and is pivotable together therewith; an airbag module (30) is disposed in a stationary position above the hood (22); a dimensionally stable element (28) is connected to the instrument panel (10) and/or to the cross-tube (18) and serves as an upper abutment for the inflated airbag (32) whereas the top of the hood (22) serves as a lower abutment; the hood (22) has a closure element (26) which co-operates with the means (16) for locking the pivoting box (12), and the hood (22) near its free end is connected by tear-off elements (24) to the instrument panel (10) or to the dimensionally stable element (28).

2. A knee-protecting system according to claim 1, **characterised in that** the hood (22), the element (28) and the airbag modulus (30) are adapted to a particular construction of vehicle so that they can be installed as accessories.

3. A knee-protecting system according to claim 1 or 2, **characterised in that** the airbag module (30) is fastened to the dimensionally stable element (28).

4. A knee-protecting system according to claim 1, 2 or 3, **characterised in that** the tear-off elements (24) are of plastic.

5. A knee-protecting system according to claim 4, **characterised in that** the tear-off elements (24) are in the form of rotary toggles.

6. A knee-protecting system according to any of claims 1 to 4, **characterised in that** after adjustments to the geometry, it can also be installed on the driver's side in the neighbourhood of the steering-column passage.

## Revendications

1. Système protège genoux pour le passager avant d'un véhicule de tourisme équipé, en dessous du tableau de bord, ou du tube transversal, d'une boîte à gants de type rabattable pouvant basculer autour d'un axe à peu près horizontal et portant, près de son bord libre, un dispositif de verrouillage,
caractérisé en ce que
• sur la boîte rabattable (12) se trouve un capot (22) de forme stable, pouvant basculer en même temps que la boîte (12),
• au-dessus du capot (22) est monté fixe un module d'air-bag (30)
• au tableau de bord (10) et/ou au tube transversal est relié un élément de forme stable (28) servant d'appui supérieur à l'air-bag (32) quand celui-ci est gonflé, tandis que la partie supérieure du capot (22) sert d'appui inférieur,
• le capot (22) est équipé d'un élément de fermeture (26) coopérant avec le dispositif de verrouillage (16) de la boîte rabattable (12) et
• le capot est relié par des éléments arrachables (24), vers son bord libre, au tableau de bord (10) ou à l'élément de forme stable (28).

2. Système selon la revendication 1,
caractérisé en ce que
le capot (22), l'élément (28) et le module d'air-bag (30) sont adaptés à un type défini de véhicule, de manière à pouvoir être intégrés en tant qu'ensemble accessoire.

3. Système selon l'une quelconque des revendications 1 ou 2,
caractérisé en ce que
le module d'air-bag (30) est fixé à l'élément de forme stable (28).

4. Système selon l'une quelconque des revendications 1, 2 ou 3,
caractérisé en ce que
les éléments arrachables (24) sont en matière plastique.

5. Système selon la revendication 4,
caractérisé en ce que
les éléments arrachables (24) ont la forme de barrettes tournantes.

6. Système selon l'une quelconque des revendications 1 à 4,
caractérisé en ce qu'
il peut être également installé du côté du conducteur, avec des adaptations géométriques dans la zone de passage de la colonne de direction.
